(19) Europäisches Patentamt
European Patent Office
Office européen des brevets

(11) **EP 3 712 821 A1**

(12) **DEMANDE DE BREVET EUROPEEN**

(43) Date de publication:
**23.09.2020 Bulletin 2020/39**

(21) Numéro de dépôt: **20162647.0**

(22) Date de dépôt: **12.03.2020**

(51) Int Cl.:
*G06N 3/063* (2006.01)     *G06N 3/08* (2006.01)
*G06N 3/04* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **20.03.2019 FR 1902853**

(71) Demandeur: **STMicroelectronics (Rousset) SAS 13790 Rousset (FR)**

(72) Inventeurs:
• **DEMAJ, Pierre**
**06200 Nice (FR)**
• **FOLLIOT, Laurent**
**06620 Gourdon (FR)**

(74) Mandataire: **Casalonga**
**Casalonga & Partners**
**Bayerstraße 71/73**
**80335 München (DE)**

(54) **PROCÉDÉ D'ANALYSE D'UN JEU DE PARAMÈTRES D'UN RÉSEAU DE NEURONES EN VUE D'UN AJUSTEMENT DE ZONES ALLOUÉES AUXDITS PARAMÈTRES**

(57) Procédé comprenant une analyse d'un jeu de paramètres initiaux définissant un réseau de neurones multicouches initial, dans lequel ladite analyse comporte une réduction de la taille d'au moins un paramètre initial de chaque couche de façon à obtenir pour chaque couche un jeu de nouveaux paramètres, chaque nouveau paramètre ayant ses données représentées en deux parties, une partie entière et une partie fractionnaire, une mise en œuvre dudit réseau de neurones en utilisant un jeu de données d'entrée de test appliqué une seule fois à chaque couche, une élaboration pour chaque couche d'une fonction de répartition ou d'une fonction de densité résultant du jeu desdits nouveaux paramètres, pour décider soit d'une augmentation ou d'une diminution de la taille de la zone mémoire allouée à la partie fractionnaire et à la partie entière de chaque nouveau paramètre associé à ladite couche.

FIG.2

**Description**

Des modes de mise en œuvre et de réalisation de l'invention concernent les réseaux de neurones plus particulièrement les réseaux de neurones profonds et notamment l'apprentissage approfondi (en anglais « deep learning »).

Les réseaux de neurones sont massivement utilisés pour résoudre divers problèmes statistiques notamment le problème de la classification de données.

Après une phase d'apprentissage automatique généralement supervisée, c'est-à-dire sur une base de données de référence déjà classifiées, un réseau de neurones « apprend » et devient tout seul capable d'appliquer la même classification à des données inconnues.

On peut citer les réseaux de neurones à convolution, ou CNN (« Convolutional Neural Networks » en anglais) qui représentent un type de réseau de neurones dans lequel le motif de connexion entre les neurones est inspiré par le cortex visuel des animaux. Ils permettent avec efficacité la reconnaissance d'objets ou de personnes dans des images ou des vidéos.

L'architecture d'un réseau de neurones comprend généralement une succession de couches dont chacune prend ses entrées sur les sorties de la couche précédente.

Les données de sortie (« features » en anglais) sont stockées dans des zones mémoires ayant une taille préalablement définie.

Les données d'entrée sont multipliées par au moins un poids d'une valeur donnée pour chaque couche.

Par « poids », qui est un terme dont la signification dans le domaine des réseaux de neurones est bien connue de l'homme du métier, on entend des paramètres de neurones configurables pour obtenir de bonnes données de sortie.

Ce poids est déterminé en entraînant le réseau de neurones sur une base de données d'entraînement. Plus précisément, le réseau de neurones traite par exemple une image extraite de ladite base de données et en sortie il fait une prédiction, c'est-à-dire à quelle classe l'image pourrait appartenir sachant que la classe de l'image est préalablement connue.

En fonction de la véracité de ce résultat, on met à jour tous les poids du réseau de neurones selon un algorithme qui s'appelle la rétropropagation du gradient.

Généralement, les données de sortie et les poids de chaque couche sont représentés en virgule flottante par exemple sur 32 bits, ce qui permet d'avoir un réseau de neurones avec de meilleures performances quant aux prédictions.

Les données de sortie et les poids de chaque couche peuvent également être représentés en virgule fixe par exemple sur 16 ou 8 bits.

Par « virgule flottante » on entend une représentation d'un nombre par un signe, une mantisse et un exposant.

Par « virgule fixe », on entend une représentation d'un nombre avec un nombre fixe de chiffres après la virgule.

Une représentation en virgule fixe comprend une partie entière c'est-à-dire les bits à gauche de la virgule, et une partie fractionnaire correspondant au nombre de bits à droite de la virgule.

Les zones mémoires allouées pour les représentations en virgule fixe sont généralement plus petites que celles allouées pour les représentations en virgule flottante.

Cette réduction de mémoire permet au système mettant en œuvre le réseau de neurones d'être plus rapide. En effet, ledit système est généralement optimisé pour des représentations en 8 ou 16 bits ce qui correspond à des représentations en virgule fixe.

Or, ce gain en rapidité conduit souvent à des pertes d'information étant donné que les zones mémoires allouées sont réduites.

Dans une représentation en virgule fixe par exemple 8 bits comprenant le bit de signe, réduire la taille de la zone mémoire allouée à la partie entière par exemple 3 bits pour augmenter la taille de la zone mémoire allouée à la partie fractionnaire par exemple 4 bits peut conduire à un risque de saturation pour les grands nombres, et réduire la taille de la zone mémoire allouée à la partie fractionnaire par exemple 3 bits pour augmenter la taille de la zone mémoire allouée à la partie entière par exemple 4 bits peut conduire à une perte de précision pour les petits nombres.

Il existe donc un besoin de trouver un bon compromis, dans la mesure du possible, entre les risques liés à la saturation et à la perte de précision.

Une approche consiste à essayer toutes les représentations possibles des données de sortie et des poids sur 8 bits et cela pour chaque couche. Cela implique la mise en œuvre pour chaque couche d'un jeu de données de test 8 à 16 fois.

Le traitement couche par couche est très fastidieux et lent.

Il existe donc un besoin de mettre en place une solution permettant de trouver le bon compromis et cela dans un temps plus court.

Selon un aspect, il est proposé un procédé comprenant une analyse d'un jeu de paramètres initiaux définissant un réseau de neurones multicouches initial.

Ladite analyse comporte une réduction de la taille d'au moins un paramètre initial de chaque couche de façon à obtenir pour chaque couche un jeu de nouveaux paramètres définissant un nouveau réseau de neurones.

Chaque nouveau paramètre a ses données représentées en deux parties, une partie entière et une partie fractionnaire.

Ladite analyse comporte également une mise en œuvre dudit nouveau réseau de neurones en utilisant un jeu de données d'entrée de test appliqué une seule fois à chaque couche.

Ladite analyse comporte également une élaboration pour chaque couche d'une fonction de répartition ou d'une fonction de densité résultant du jeu desdits nouveaux paramètres.

Ladite analyse comporte également une utilisation de la fonction de répartition ou de la fonction de densité pour décider :

- soit d'une augmentation de la taille de la zone mémoire allouée à la partie fractionnaire et d'une diminution de la taille de la zone mémoire allouée à la partie entière,
- soit d'une diminution de la taille de la zone mémoire allouée à la partie fractionnaire et d'une augmentation de la taille de la zone mémoire allouée à la partie entière de chaque nouveau paramètre associé à ladite couche.

Par « paramètre initial » on entend un paramètre relatif à la configuration du réseau de neurones, par exemple les poids de chaque couche et la taille de la zone mémoire à allouer pour les données de sortie de chaque couche.

Chaque paramètre ayant une taille mémoire définie, un jeu de nouveaux paramètres est un jeu où la taille mémoire d'au moins un paramètre initial ou de certains ou de tous a été modifiée par exemple en réduisant ladite taille mémoire.

La réduction de la taille mémoire comprend avantageusement un passage des paramètres représentés en virgule flottante à une représentation en virgule fixe.

Ceci implique par conséquent un ajustement du nombre de bits de la partie fractionnaire et de la partie entière d'au moins un paramètre initial ou de certains ou de tous.

Pour ajuster la taille relative à la partie fractionnaire et à la partie entière, on met à l'entrée du nouveau réseau de neurones c'est-à-dire avec un nouveau jeu de paramètres, un jeu de données d'entrée de test. Ce jeu de données sert à évaluer la performance du réseau de neurones.

Ce jeu de données n'est exécuté qu'une seule fois par couche. Cela permet d'augmenter la rapidité du traitement du réseau de neurones.

Cette mise en œuvre permet de délivrer une matrice de données de sortie de la couche qui permet par la suite d'élaborer une fonction de répartition ou de densité.

On peut également récupérer les données relatives aux poids de la couche.

Ladite fonction de densité ou de répartition permet de déterminer comment l'ajustement doit être réalisé au niveau de la taille de la zone mémoire allouée à la partie entière et de la taille de la zone mémoire allouée à la partie fractionnaire pour trouver un bon compromis entre les risques de saturation et de perte de précision.

Selon un mode de mise en œuvre, ledit jeu de données d'entrée de test comprend une pluralité de vecteurs de données, et on délivre pour chaque couche des vecteurs successivement un à un ou par groupe successif de vecteurs et on génère un résultat représentatif des nouveaux paramètres associés à ladite couche.

Lorsque le réseau de neurones est exécuté dans un processeur graphique ou GPU (pour « Graphics Processing Unit » en anglais), il est avantageux de délivrer pour chaque couche un groupe successif de vecteurs pour tirer profit du parallélisme dudit processeur.

Selon un mode de mise en œuvre, l'élaboration de la fonction de répartition ou de la fonction de densité comprend le calcul d'une densité de probabilité des valeurs des nouveaux paramètres associés à chaque couche, obtenus par la mise en œuvre dudit nouveau réseau pour chaque couche.

Chaque vecteur ou groupe de vecteurs délivré permet d'obtenir en sortie de nouvelles valeurs correspondant aux nouveaux paramètres.

Il est avantageux de calculer une densité de probabilité de ces nouvelles valeurs pour ladite couche.

Selon un mode de mise en œuvre, l'élaboration de la fonction de répartition ou de la fonction de densité pour chaque couche comprend une répartition sur N valeurs des valeurs possibles discrétisées des nouveaux paramètres délivrés par la couche, un calcul de la densité de probabilité de chaque valeur parmi les N valeurs, et un stockage de chaque densité de probabilité calculée associée à chacune des N valeurs.

Dans le but de ne pas ralentir lesdits calculs et l'élaboration de la fonction de densité ou de répartition, il est souhaitable de stocker N valeurs possibles, par exemple 32 valeurs.

Selon un mode de mise en œuvre, les N valeurs sont sous forme de puissance de 2.

La mise sous la forme de puissance de 2 est avantageuse pour réaliser des opérations arithmétiques du type complément à deux connues de l'homme du métier.

Selon un mode de mise en œuvre, l'utilisation de la fonction de répartition ou de la fonction de densité comprend une première sélection d'une première valeur correspondant à la valeur maximale des N valeurs réparties et une deuxième sélection d'une deuxième valeur correspondant à l'une des N valeurs réparties associée à une première valeur seuil, un calcul de la différence entre la première valeur et la deuxième valeur et une comparaison de la différence avec une deuxième valeur seuil.

Par exemple la première valeur seuil est 0.2, ce qui veut dire que pour choisir la valeur N associée à ladite première valeur seuil, on se positionne idéalement sur l'axe des abscisses correspondant à la valeur N à partir de laquelle la fonction de répartition ou de densité a sa concentration cumulée supérieure ou égale à 80%.

Généralement, on se positionne entre deux valeurs N de l'axe des abscisses. Il est souhaitable, dans ce cas, pour avoir une valeur précise, d'effectuer une interpolation linéaire.

La comparaison avec la deuxième valeur seuil permet de déterminer le bon compromis à faire entre la partie fractionnaire et la partie entière.

La deuxième valeur seuil peut être comprise par exemple entre 1 et5.

Selon un mode de mise en œuvre, si la différence est inférieure ou égale à la deuxième valeur seuil, on augmente la taille de la zone mémoire allouée à la partie entière et on diminue la taille de la zone mémoire allouée à la partie fractionnaire et si la différence est strictement supérieure à la deuxième valeur seuil, on augmente la taille de la zone mémoire allouée à la partie fractionnaire et on diminue la taille de la zone mémoire allouée à la partie entière.

Si la différence est inférieure ou égale à la deuxième valeur seuil, cela veut dire qu'il y a un haut risque de saturation au niveau de la couche. Par conséquent, il est avantageux d'ajuster la répartition des bits de la partie entière et fractionnaire en augmentant la taille de la zone mémoire allouée à la partie entière et en diminuant la taille de la zone mémoire allouée à la partie fractionnaire.

Si la différence est strictement supérieure à la deuxième valeur seuil, cela veut dire qu'il n'y a pas de grands risques de saturation mais un risque de perte de précision. Il est donc préférable d'ajuster la répartition des bits de la partie entière et fractionnaire en diminuant la taille de la zone mémoire allouée à la partie entière et en augmentant la taille de la zone mémoire allouée à la partie fractionnaire.

Selon un autre aspect, il est également proposé un système comprenant une unité de calcul, par exemple un processeur, couplée à un ensemble de mémoires, l'unité de calcul comportant des moyens d'analyse configurés pour effectuer une analyse d'un jeu de paramètres initiaux définissant un réseau de neurones multicouches initial.

Les moyens d'analyse sont configurés pour réduire la taille d'au moins un paramètre initial de chaque couche de façon à obtenir pour chaque couche un jeu de nouveaux paramètres définissant un nouveau réseau de neurones, chaque nouveau paramètre ayant ses données représentées en deux parties, une partie entière et une partie fractionnaire, mettre en œuvre le nouveau réseau de neurones en utilisant un jeu de données d'entrée de test appliqué une seule fois à chaque couche, élaborer pour chaque couche une fonction de répartition ou une fonction de densité résultant du jeu desdits nouveaux paramètres et utiliser la fonction de répartition ou la fonction de de densité pour décider soit d'augmenter la taille de la zone mémoire allouée à la partie fractionnaire et de diminuer la taille de la zone mémoire allouée à la partie entière soit de diminuer la taille de la zone mémoire allouée à la partie fractionnaire et d'augmenter la taille de la zone mémoire allouée à la partie entière de chaque nouveau paramètre associé à ladite couche.

Selon un mode de réalisation, ledit jeu de données d'entrée de test comprend une pluralité de vecteurs de données, et les moyens d'analyse sont configurés pour délivrer pour chaque couche des vecteurs successivement un à un ou par groupe successif de vecteurs, et générer un résultat représentatif des nouveaux paramètres associés à ladite couche.

Selon un mode de réalisation, pour élaborer la fonction de répartition ou la fonction de densité, les moyens d'analyse sont configurés pour calculer une densité de probabilité de vecteurs des nouveaux paramètres associés à chaque couche, obtenus par la mise en œuvre dudit nouveau réseau pour chaque couche.

Selon un mode de réalisation, pour élaborer la fonction de répartition ou la fonction de densité pour chaque couche, les moyens d'analyse sont configurés pour répartir sur N valeurs les valeurs discrétisées possibles des nouveaux paramètres délivrés par la couche, calculer la densité de probabilité de chaque valeur parmi les N valeurs et stocker chaque densité de probabilité calculée associée à chacune des N valeurs.

Selon un mode de réalisation, les N valeurs sont sous forme de puissance de 2.

Selon un mode de réalisation, les moyens d'analyse sont configurés pour utiliser la fonction de répartition ou la fonction de densité, et pour effectuer une première sélection d'une première valeur correspondant à la valeur maximale des N valeurs réparties, effectuer une deuxième sélection d'une deuxième valeur correspondant à l'une des N valeurs réparties associée à une première valeur seuil, calculer la différence entre la première valeur et la deuxième valeur et comparer la différence avec une deuxième valeur seuil.

Selon un mode de réalisation, si la différence est inférieure à la deuxième valeur seuil, les moyens d'analyse sont configurés pour augmenter la taille de la zone mémoire allouée à la partie entière et diminuer la taille de la zone mémoire allouée à la partie fractionnaire et si la différence est strictement supérieure à la deuxième valeur seuil, les moyens d'analyse sont configurés pour augmenter la taille de la zone mémoire allouée à la partie fractionnaire et pour diminuer la taille de la zone mémoire allouée à la partie entière.

Selon un autre aspect, il est également proposé un microcontrôleur comprenant ledit système tel que défini ci-avant.

D'autres avantages et caractéristiques de l'invention apparaîtront à la lecture de la description détaillée de modes de mise en œuvre et de réalisation, nullement limitatifs, et des dessins annexés sur lesquels :

[Fig 1] illustre schématiquement un mode de réalisation de l'invention ;
[Fig 2] illustre schématiquement un mode de mise en œuvre de l'invention ;
[Fig 3] illustre schématiquement un mode de mise en œuvre de l'invention ;
[Fig 4] illustre schématiquement un mode de mise en œuvre de l'invention ;
[Fig 5] illustre schématiquement un mode de mise en œuvre de l'invention.

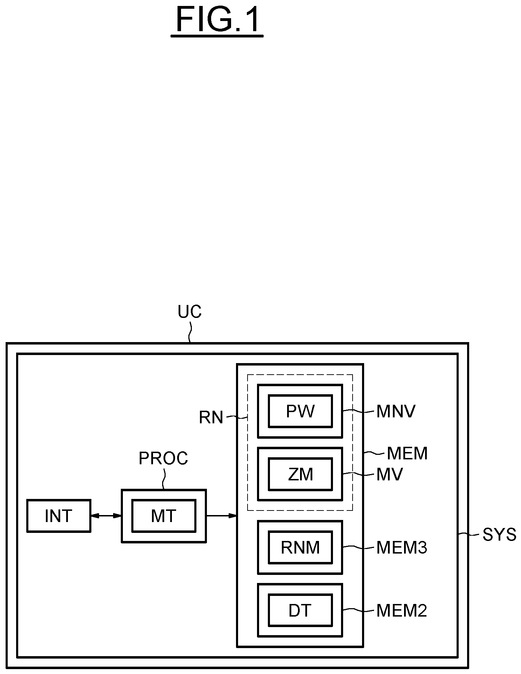

Sur la figure 1, la référence UC désigne un objet électronique par exemple un microcontrôleur, un générateur de code ou tout autre objet pouvant contenir une architecture logicielle embarquée ou matérielle.

L'objet UC comprend un système SYS par exemple un module configuré pour implanter un réseau de neurones initial RN, et comprenant un ensemble de mémoires MEM, une unité de calcul (ici un processeur) PROC et une interface utilisateur INT.

L'ensemble des mémoires MEM est couplé au processeur PROC et comprend une mémoire non-volatile MNV par exemple une mémoire ROM (« Read-Only Memory » en anglais). Ladite mémoire non-volatile est configurée pour stocker la configuration du réseau de neurones RN par exemple les différentes couches le caractérisant et ses poids PW.

L'ensemble des mémoires MEM comprend également une mémoire volatile MV par exemple une mémoire RAM (pour « Random Access Memory » en anglais). La mémoire volatile MV comporte des zones mémoires initiales ZM destinés à contenir les données de sortie de chaque couche du réseau de neurones initial RN.

Les poids PW et la taille des zones mémoires initiales ZM représentent un jeu de paramètres initiaux du réseau de neurones RN.

L'ensemble de mémoires MEM comprend également une mémoire MEM3 configurée pour stocker les données relatives à un nouveau jeu de paramètres d'un nouveau réseau de neurones RNM qui représente le réseau de neurones RN modifié.

Le processeur PROC est configuré également pour stocker le nouveau jeu de paramètres du réseau de neurones RNM à la place du jeu de paramètres initiaux du réseau de neurones initial RN.

L'ensemble des mémoires MEM comprend également une mémoire MEM2 par exemple une mémoire non-volatile ROM configurée pour stocker un jeu de données d'entrée de test DT.

Le jeu de données d'entrée de test DT est configuré pour évaluer la performance du réseau de neurones initial RN ou la performance du réseau de neurones modifié RNM.

Le processeur PROC comprend également des moyens d'analyse MT, réalisés par exemple sous forme logicielle ou matérielle, configurés pour effectuer une analyse du jeu de paramètres initiaux définissant ledit réseau de neurones, réduire la taille d'au moins un paramètre initial par exemple tailles des zones mémoires initiales ZM ou les deux paramètres initiaux des couches dudit réseau RN et ainsi obtenir un nouveau jeu de paramètres définissant le nouveau réseau de neurones RNM.

En modifiant ainsi le jeu de paramètres initiaux du réseau de neurones RN, on obtient un nouveau de jeu de paramètres.

Les nouveaux paramètres ainsi réduits ont leurs données représentées en virgule fixe.

Par « virgule fixe » on entend une représentation d'un nombre avec un nombre fixe de chiffres après la virgule.

Une représentation en virgule fixe comprend une partie entière c'est-à-dire des bits à gauche de la virgule, et une partie fractionnaire correspondant au nombre de bits à droite de la virgule.

Cette réduction de mémoire permet au système mettant en œuvre le réseau de neurones d'être plus rapide.

Les moyens d'analyse MT sont configurés pour appliquer ledit jeu de données d'entrée de test DT une seule fois à chaque couche ce qui permet d'augmenter la rapidité du traitement du nouveau réseau de neurones RNM.

Les moyens d'analyse MT sont par la suite configurés pour élaborer une fonction de répartition ou de densité à partir des données résultant de la mise en œuvre du jeu de données d'entrée de test et ajuster la taille de la zone mémoire allouée à la partie fractionnaire et entière en fonction des données extraites de ladite fonction.

On peut par exemple discrétiser les données résultantes sur 32 valeurs à stocker. Cela permet d'éviter de ralentir l'élaboration de la fonction de densité ou de répartition.

Le processeur PROC est couplé à l'interface utilisateur INT configurée pour permettre à l'utilisateur de choisir le nombre de valeurs à stocker dans la mémoire MEM3.

Ce nombre peut être également choisi par défaut.

L'interface utilisateur INT est également configurée pour permettre à l'utilisateur de donner des valeurs à des paramètres intervenant dans la décision relative audit ajustement.

Ces paramètres sont stockés dans une mémoire volatile par exemple la mémoire MEM3.

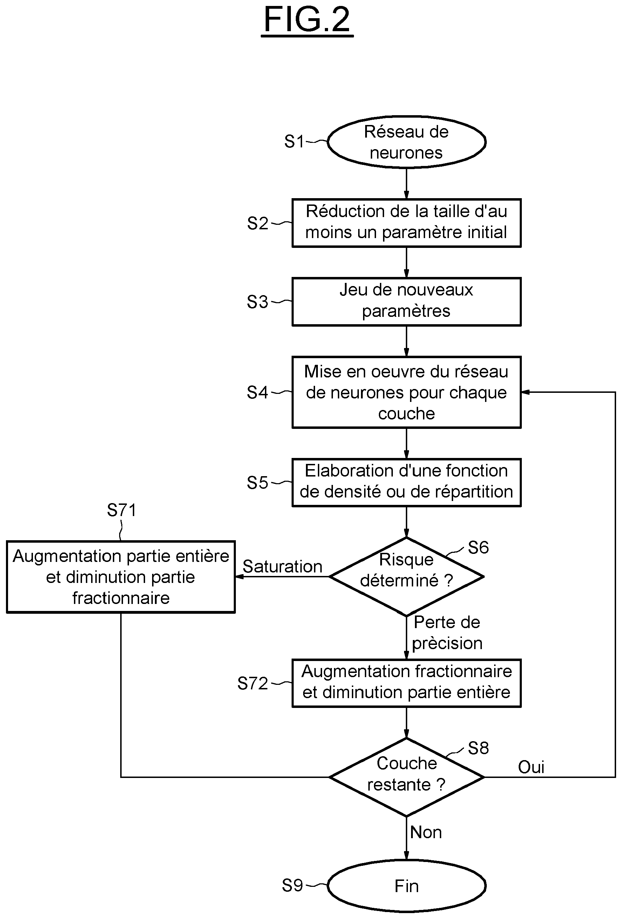

La figure 2 représente un algorithme d'analyse du jeu de données de paramètres initiaux définissant le réseau de neurones RN.

Dans l'étape S1, le processeur PROC extrait le jeu de paramètres initiaux du réseau de neurones RN par exemple les poids PW de toutes les couches ou les tailles des zones mémoires initiales ZM de chaque couche ou bien les deux paramètres.

Dans l'étape S2, les moyens d'analyse MT effectuent une réduction de la taille mémoire initiale d'au moins un paramètre initial du réseau de neurones RN par exemple une réduction des poids PW ou des tailles des zones mémoires initiales ZM ou bien une réduction de la taille mémoire initiale des deux paramètres.

A titre d'exemple, si ladite taille mémoire initiale dudit au moins un paramètre est de 32 bits, les moyens d'analyse MT réduisent la taille initiale de 24 bits. Ledit au moins un paramètre a donc une nouvelle taille mémoire de 8 bits.

Une représentation dudit au moins un paramètre sur 8 bits par exemple est une représentation en virgule fixe.

On obtient ainsi dans l'étape S3 un jeu de nouveaux paramètres.

Dans l'étape S4, le processeur PROC met en œuvre le nouveau réseau de neurones RNM en appliquant le jeu de données d'entrée de test DT à chaque couche dudit nouveau réseau.

Les données résultantes de la mise en œuvre du jeu de données d'entrée de test DT permettent d'élaborer pour chaque couche une fonction de répartition ou de densité connue de l'homme du métier dans l'étape S5.

L'élaboration de la fonction de répartition ou de densité permet dans l'étape S6 de déterminer si la réduction de la taille dudit au moins un paramètre conduit à un risque de saturation ou de perte de précision à partir des données extraites de ladite fonction.

Par « risque de saturation » on entend qu'une majorité des données résultantes de la mise en œuvre du jeu de données d'entrée de test DT sont de grands nombres. Il faut donc prévoir assez de bits dans la partie entière pour pouvoir les représenter.

Par « risque de perte de précision » on entend qu'une majorité des données résultantes de la mise en œuvre du jeu de données d'entrée de test DT sont de petits nombres. Il faut donc prévoir assez de bits dans la partie fractionnaire pour pouvoir les représenter et ainsi diminuer la perte de la précision.

En d'autres termes, l'élaboration de la fonction de répartition ou de densité permet de déterminer comment l'ajustement doit être réalisé au niveau de la taille de la partie entière et de la taille de la partie fractionnaire pour trouver un bon compromis entre les risques de saturation et de perte de précision.

S'il y a un risque de saturation, on passe à l'étape S71 dans laquelle les moyens d'analyse MT augmentent la taille de la zone mémoire allouée à la partie entière et diminuent la taille de la zone mémoire allouée à la partie fractionnaire.

S'il y a un risque de perte de précision, on passe à l'étape S72 dans laquelle les moyens d'analyse MT augmentent la taille de la zone allouée à la partie fractionnaire et diminuent la taille de la zone mémoire allouée à la partie entière.

Les moyens d'analyse MT vérifient ensuite s'il y a une couche restante à traiter dans l'étape S8.

Si oui, on réitère les étapes S4, S5, S6 et S71 ou S72 pour ajuster la taille de zone mémoire allouée à la partie fractionnaire et à la partie entière pour ladite couche.

S'il n'y a pas de couches restantes, cela veut dire que ledit ajustement a été réalisé pour toutes les couches du réseau de neurones RNM. On passe donc à l'étape S9 qui marque la fin de l'exécution de l'algorithme.

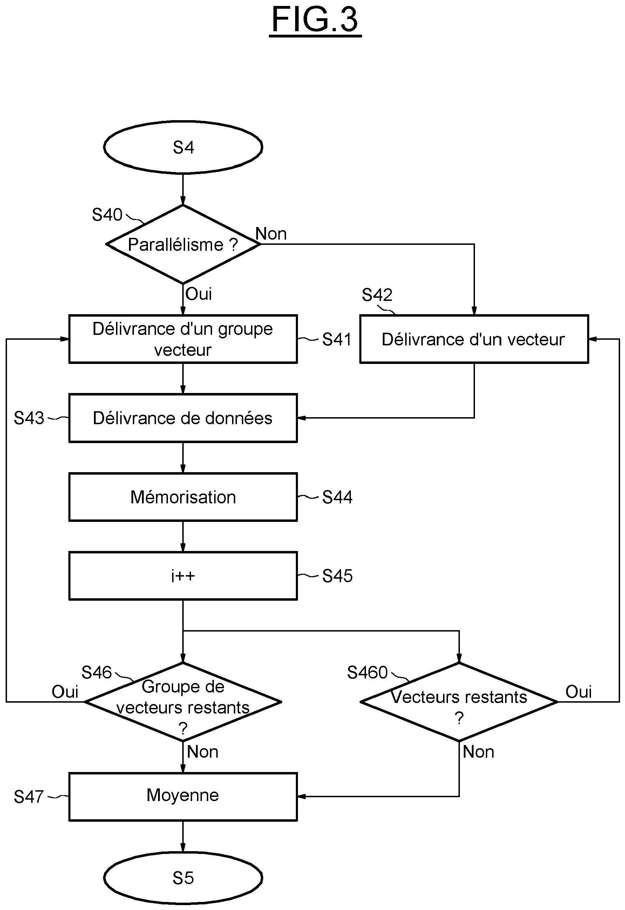

La figure 3 représente les sous-étapes de l'étape S4 correspondant à l'application du jeu de données d'entrée de test DT à chaque couche du réseau de neurones RNM.

Le jeu de données d'entrée de test DT comprend une pluralité de vecteurs de données.

Lorsque le réseau de neurones RNM est exécuté dans un processeur PROC graphique GPU (pour « Graphics Processing Unit » en anglais), il est avantageux de délivrer pour chaque couche un groupe successif de vecteurs pour tirer profit du parallélisme dudit processeur PROC.

Les moyens d'analyse MT vérifient par conséquent si le processeur PROC est un processeur graphique à l'étape S40. Si oui, on passe à l'étape S41 dans laquelle les moyens d'analyse MT délivrent un premier groupe successif de vecteurs dudit jeu de données d'entrée de test DT.

Le premier groupe de vecteur délivré pour chaque couche à l'étape S43 permet de produire, après passage par les poids de la couche et dont la taille été réduite, une matrice de données de sortie de la couche.

Par « matrice » on entend une suite de données de sortie dont la taille a été réduite, par exemple une suite de valeurs 32, 16, 2.

La taille de la zone mémoire ZM étant réduite, certaines valeurs ne seront pas correctement représentées. Cela veut dire que si en sortie de la couche, la zone mémoire allouée aux données de sortie, dont la taille a été réduite, contient une majorité de grandes valeurs, il se peut qu'on ait un risque de saturation sur les plus grandes valeurs.

Dans le cas contraire, si en sortie de la couche, la zone mémoire allouée aux données de sortie, dont la taille a été réduite, contient une majorité de petites valeurs, il se peut qu'on ait un risque de perte de précision sur les plus petites valeurs.

En d'autres termes, étant donné que la réduction de la taille de la zone mémoire initiale ZM a une conséquence directe sur la représentation des données de sortie, il est avantageux d'utiliser ces valeurs dans l'élaboration d'une fonction de répartition ou de densité permettant par la suite d'effectuer ledit ajustement sur la taille de la zone mémoire allouée aux données de sortie qui représente un des nouveaux paramètres du nouveau réseau de neurones RNM.

Aussi, sachant que les valeurs des données de sortie dépendent des valeurs desdits poids qui représentent l'un des nouveaux paramètres du nouveau réseau de neurones RNM, la réduction de la taille des poids PW conduit soit à une saturation au niveau des poids ou à une perte de précision, ce qui a comme conséquence une délivrance de données de sorties avec des valeurs imprécises.

Il est donc avantageux d'utiliser également les valeurs desdits poids dans l'élaboration d'une fonction de répartition ou de densité permettant par la suite d'effectuer ledit ajustement sur la taille des poids pour chaque couche.

Pour chaque couche, les données de sortie de la matrice ou les valeurs des poids sont discrétisées sur N valeurs sur l'axe des abscisses de la fonction de répartition ou de densité.

Il est avantageux de stocker N valeurs englobant les données de sortie discrétisées délivrées par la couche ou les N valeurs des poids ou une combinaison des deux pour éviter de ralentir par la suite les différents calculs liés à l'élaboration de la fonction de densité ou de répartition. N peut par exemple être égal à 32.

L'utilisateur peut paramétrer N via l'interface utilisateur INT en fonction de la complexité de son réseau et de la mémoire disponible.

Dans l'étape S44, les N valeurs seront mémorisées par exemple dans la mémoire volatile MV.

Ensuite, dans l'étape S45, on incrémente un index i correspondant au nombre de groupes de vecteurs du jeu de données d'entrée de test DT et s'il reste, dans l'étape S46, des groupes de vecteurs à mettre en œuvre pour ladite couche, on remonte à l'étape S41 pour délivrer le groupe de vecteurs suivant et réitérer par conséquent les étapes S43, S44, S45 et S46.

Si dans l'étape S46, il n'y a plus de groupes de vecteurs à délivrer à ladite couche, on passe à l'étape S47 où les moyens d'analyse MT calculent pour chaque valeur parmi les N valeurs mémorisées à l'étape S44, une moyenne associée à chaque valeur.

Cette moyenne correspond à la densité de probabilité de chaque valeur dans le jeu des N valeurs.

Les moyens d'analyse MT calculent N moyennes qui permettent donc de tracer la fonction de densité ou de répartition dans l'étape S5.

Dans le cas où le processeur PROC n'est pas un processeur graphique, on passe de l'étape S40 à l'étape S42 dans laquelle les moyens d'analyse MT délivrent des vecteurs un à un à ladite couche. Les étapes suivantes sont les mêmes que les étapes S43, S44, S45. En revanche, après avoir incrémenté l'index i, on passe à l'étape S460, dans laquelle les moyens d'analyse MT vérifient s'il reste des vecteurs à mettre en œuvre pour ladite couche.

Si oui, les moyens d'analyse MT remontent à l'étape S42 pour délivrer le vecteur suivant. Si non, les moyens d'analyse MT passent à l'étape S47.

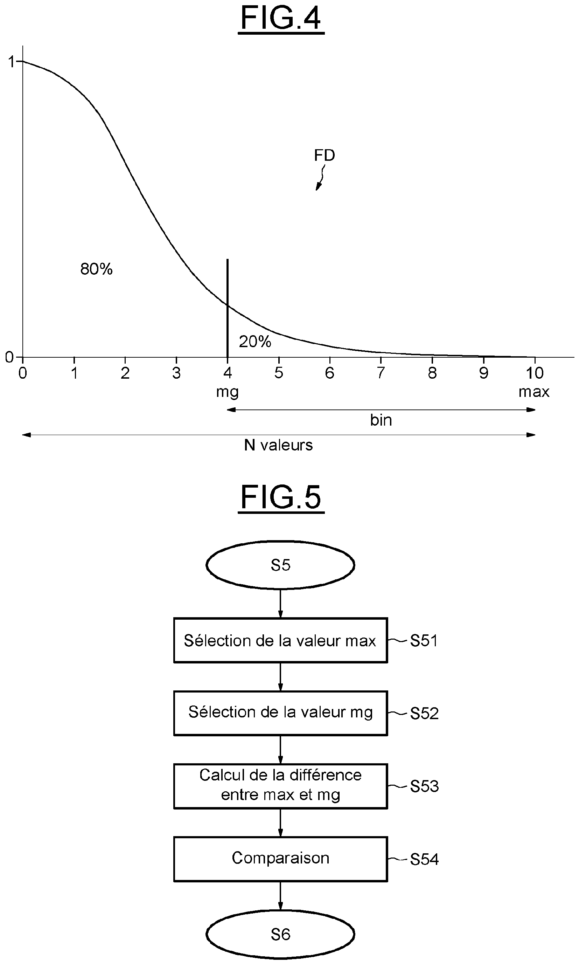

La figure 4 illustre un graphique FD représentant une fonction de répartition élaborée par les moyens d'analyse MT et la figure 5 représente les différentes sous-étapes conduisant à la détermination du risque lié à la réduction de la taille dudit au moins un paramètre initial.

Sur l'axe des abscisses, les N valeurs stockées et moyennées sont représentées ici allant de 0 à 10.

Lesdites N valeurs peuvent également être représentées sous forme de puissance de 2 ce qui permet avantageusement de réaliser des opérations arithmétiques du type complément à deux.

Sur l'axe des ordonnées, les valeurs allant de 0 à 1 représentent des probabilités cumulées.

Pour déterminer s'il y a un risque de saturation ou de perte de précision suite à la réduction de la taille mémoire dudit au moins un paramètre, les moyens d'analyse MT commencent par faire une première sélection dans l'étape S51 d'une première valeur max correspondant à la valeur maximale des N valeurs réparties sur l'axe des abscisses de ladite fonction de répartition, ici la valeur max 10.

Les moyens d'analyse MT effectuent ensuite dans l'étape S52 une deuxième sélection d'une deuxième valeur mg correspondant à l'une des N valeurs réparties associée à une première valeur seuil par exemple 0.2 ou toute valeur seuil permettant de déterminer la zone dans laquelle la densité est importante.

Pour une meilleure précision de la deuxième valeur mg, les moyens d'analyse MT réalisent une interpolation linéaire.

La première valeur seuil peut être choisie par l'utilisateur via l'interface INT et s'utilise selon la formule suivante :

$$cdf(N) >= 1 - \text{la première valeur seuil}$$

dans laquelle : cdf désigne la fonction de répartition selon la variable aléatoire N.

Ici on a cdf(N) >= 1 - 0.2 et donc cdf(N) >= 0.8 ce qui veut dire que sur l'axe des abscisses, on sélectionne la valeur à partir de laquelle on a une densité de probabilité cumulée de 80%.

La valeur mg associée à ladite première valeur seuil est ici 4.

Par la suite, les moyens d'analyse MT calculent une différence bin dans l'étape S53 entre la première valeur max et la deuxième valeur mg, ce qui donne ici 10-4. La différence est égale ici à 6.

Les moyens d'analyse MT réalisent ensuite une comparaison dans l'étape S54 entre la différence bin calculée c'est-à-dire 6 et une deuxième valeur seuil que l'utilisateur peut également sélectionner via l'interface INT.

Le résultat de la comparaison permet de déterminer dans l'étape S6 s'il y a un risque de saturation ou de perte de précision.

Par exemple, si la deuxième valeur seuil est égale à 3, le résultat de la différence bin étant égal à 6, le résultat est donc supérieur à la deuxième valeur seuil. Cela veut dire qu'il y a un risque de perte de précision.

Les moyens d'analyse MT réalisent par conséquent ledit ajustement dans l'étape S72 décrite dans la figure 2 et cela selon la formule :

$$index \ = \ max \ - \ round(1 \ + \ tanh((K*bin \ - \ deuxième \ valeur \ seuil)/M))$$

dans laquelle :

round est une fonction qui permet d'arrondir les nombres à un niveau de précision spécifié.

Tanh est une tangente hyperbolique. On peut remplacer la tangente par toute fonction croissante entre 0 et 1 qui sature.

K et M sont des paramètres ajustables qui permettent de mieux ajuster. K peut par exemple être égal à 2 et M par exemple à 16.

Le résultat du calcul est la valeur index correspondant au décalage à effectuer en bits donc un décalage de la virgule.

En d'autres termes, il s'agit de déterminer s'il faut accorder plus de bits à la zone allouée à la partie fractionnaire ou à la zone allouée à la partie entière. Ici, dans le cas du risque de la perte de précision, il faut faire un décalage de la virgule vers la gauche.

Dans le cas où le résultat de la différence bin est inférieur ou égal à la deuxième valeur seuil, les moyens d'analyse MT réalisent par conséquent ledit ajustement dans l'étape S71 décrite dans la figure 2 et cela selon la formule :

$$index = max + round(deuxième \ valeur \ seuil - bin)$$

dans laquelle

La valeur index correspond ici également au décalage à effectuer en bits donc un décalage de la virgule c'est-à-dire déterminer s'il faut accorder plus de bits à la partie fractionnaire ou à la partie entière. Ici, dans le cas du risque de saturation, il faut faire un décalage de la virgule vers la droite.

Bien entendu, toutes les étapes décrites sont aussi applicables à une fonction de densité.

## Revendications

1. Procédé comprenant une analyse d'un jeu de paramètres initiaux (PW, ZM) définissant un réseau de neurones multicouches initial (RN), dans lequel ladite analyse comporte une réduction (S2) de la taille d'au moins un paramètre initial (PW, ZM) de chaque couche de façon à obtenir pour chaque couche un jeu de nouveaux paramètres définissant un nouveau réseau de neurones (RNM), chaque nouveau paramètre ayant ses données représentées en deux parties, une partie entière et une partie fractionnaire, une mise en œuvre (S4) dudit nouveau réseau de neurones (RNM) en utilisant un jeu de données d'entrée de test appliqué (DT) une seule fois à chaque couche, une élaboration (S5) pour chaque couche d'une fonction de répartition ou d'une fonction de densité (FD) résultant du jeu desdits nouveaux paramètres, et une utilisation de la fonction de répartition ou de la fonction de densité (FD) pour décider (S6) soit d'une augmentation de la taille de la zone mémoire allouée à la partie fractionnaire et une diminution de la taille de la zone mémoire allouée à la partie entière (S72) soit d'une diminution de la taille de la zone mémoire allouée à la partie fractionnaire et une augmentation de la taille de la zone mémoire allouée à la partie entière (S71) de chaque nouveau paramètre associé à ladite couche.

2. Procédé selon la revendication 1, dans lequel ledit jeu de données d'entrée de test (DT) comprend une pluralité de vecteurs de données, et dans lequel on délivre pour chaque couche des vecteurs successivement un à un (S42) ou par groupe successif de vecteurs (S41) et on génère un résultat (S43) représentatif des nouveaux paramètres associés à ladite couche.

3. Procédé selon la revendication 2, dans lequel l'élaboration de la fonction de répartition ou de la fonction de densité (FD) comprend le calcul d'une densité de probabilité (S47) des valeurs des nouveaux paramètres associés à chaque couche, obtenus par la mise en œuvre dudit nouveau réseau (RNM) pour chaque couche.

4. Procédé selon la revendication 3, dans lequel l'élaboration de la fonction de répartition ou de la fonction de densité (FD) pour chaque couche comprend une répartition sur N valeurs des valeurs possibles discrétisées des nouveaux paramètres délivrés par la couche, un calcul de la densité de probabilité de chaque valeur parmi les N valeurs, et un stockage de chaque densité de probabilité calculée (S47) associée à chacune des N valeurs.

5. Procédé selon la revendication 4, dans lequel les N valeurs sont sous forme de puissance de 2.

6. Procédé selon la revendication 4 ou 5, dans lequel l'utilisation de la fonction de répartition ou de la fonction de densité (FD) comprend une première sélection (S51) d'une première valeur (max) correspondant à la valeur maximale des N valeurs réparties et une deuxième sélection (S52) d'une deuxième valeur (mg) correspondant à l'une des N valeurs réparties associée à une première valeur seuil, un calcul (S53) de la différence (bin) entre la première valeur et la deuxième valeur et une comparaison (S6) de la différence avec une deuxième valeur seuil.

7. Procédé selon la revendication 6, dans lequel si la différence (bin) est inférieure ou égale à la deuxième valeur seuil, on augmente la taille de la zone mémoire allouée à la partie entière et on diminue la taille de la zone mémoire allouée à la partie fractionnaire (S71) et si la différence (bin) est strictement supérieure à la deuxième valeur seuil, on augmente la taille de la zone mémoire allouée à la partie fractionnaire et on diminue la taille de la zone mémoire allouée à la partie entière (S72).

8. Système (SYS) comprenant une unité de calcul (PROC), par exemple un processeur, couplée à un ensemble de mémoires (MEM), l'unité de calcul (PROC) comportant des moyens d'analyse (MT) configurés pour effectuer une analyse d'un jeu de paramètres initiaux (PW, ZM) définissant un réseau de neurones multicouches initial (RN), et dans lequel les moyens d'analyse (MT) sont configurés pour réduire (S2) la taille d'au moins un paramètre initial (PW, ZM) de chaque couche de façon à obtenir pour chaque couche un jeu de nouveaux paramètres définissant un nouveau réseau de neurones (RNM), chaque nouveau paramètre ayant ses données représentées en deux parties, une partie entière et une partie fractionnaire, mettre en œuvre (S4) le nouveau réseau de neurones (RNM) en utilisant un jeu de données d'entrée de test (DT) appliqué une seule fois à chaque couche, élaborer (S5) pour chaque couche une fonction de répartition ou une fonction de densité (FD) résultant du jeu desdits nouveaux paramètres et utiliser la fonction de répartition ou la fonction de de densité (FD) pour décider (S6) soit d'augmenter la taille de la zone mémoire allouée à la partie fractionnaire et de diminuer la taille de la zone mémoire allouée à la partie entière (S72) soit de diminuer la taille de la zone mémoire allouée à la partie fractionnaire et d'augmenter la taille de la zone mémoire allouée à la partie entière (S71) de chaque nouveau paramètre associé à ladite couche.

9. Système selon la revendication 8, dans lequel ledit jeu de données d'entrée de test (DT) comprend une pluralité de vecteurs de données, et dans lequel les moyens d'analyse (MT) sont configurés pour délivrer pour chaque couche des vecteurs successivement un à un (S42) ou par groupe successif de vecteurs (S41), et générer un résultat (S43) représentatif des nouveaux paramètres associés à ladite couche.

10. Système selon la revendication 9, dans lequel pour élaborer la fonction de répartition ou la fonction de densité (FD), les moyens d'analyse (MT) sont configurés pour calculer une densité de probabilité (S47) de vecteurs des nouveaux paramètres associés à chaque couche, obtenus par la mise en œuvre dudit nouveau réseau (RNM) pour chaque couche par lesdits moyens d'analyse.

11. Système selon la revendication 10, dans lequel pour élaborer la fonction de répartition ou la fonction de densité (FD) pour chaque couche, les moyens d'analyse (MT) sont configurés pour répartir sur N valeurs des valeurs possibles discrétisées des nouveaux paramètres délivrés par la couche, calculer la densité de probabilité de chaque valeur parmi les N valeurs et stocker chaque densité de probabilité calculée (S47) associée à chacune des N valeurs.

12. Système selon la revendication 11, dans lequel les N valeurs sont sous forme de puissance de 2.

13. Système selon la revendication 11 ou 12, dans lequel les moyens d'analyse configurés pour utiliser la fonction de répartition ou la fonction de densité (FD), sont également configurés pour effectuer une première sélection (S51) d'une première valeur (max) correspondant à la valeur maximale des N valeurs réparties, effectuer une deuxième sélection (S52) d'une deuxième valeur (mg) correspondant à l'une des N valeurs réparties associée à une première valeur seuil, calculer (S53) la différence (bin) entre la première valeur et la deuxième valeur et comparer (S6) la différence avec une deuxième valeur seuil.

14. Système selon la revendication 13, dans lequel si la différence (bin) est inférieure à la deuxième valeur seuil, les moyens d'analyse sont configurés pour augmenter la taille de la zone mémoire allouée à la partie entière et diminuer la taille de la zone mémoire allouée à la partie fractionnaire (S71) et si la différence est strictement supérieure à la deuxième valeur seuil, les moyens d'analyse sont configurés pour augmenter la taille de la zone mémoire allouée à la partie fractionnaire et pour diminuer la taille de la zone mémoire allouée à la partie entière (S72).

15. Dispositif tel qu'un microcontrôleur (UC) comprenant un système (SYS) selon les revendications 8 à 14.

# FIG.1

# FIG.2

S1 — ( Réseau de neurones )

S2 — Réduction de la taille d'au moins un paramètre initial

S3 — Jeu de nouveaux paramètres

S4 — Mise en oeuvre du réseau de neurones pour chaque couche

S5 — Elaboration d'une fonction de densité ou de répartition

S71

Augmentation partie entière et diminution partie fractionnaire

Saturation ← Risque déterminé ? — S6

Perte de prècision

S72 — Augmentation fractionnaire et diminution partie entière

Couche restante ? — S8    Oui

Non

S9 — ( Fin )

# FIG.3

```
                    ┌─────────┐
                    │   S4    │
                    └────┬────┘
                         │
        S40 ╲            ▼
           ┌──────────────────┐      Non
           │  Parallélisme ?  │──────────────────────┐
           └─────────┬────────┘                      │
                     │ Oui                            ▼
                     ▼                    S42 ╲
  ┌──────────────────────────┐       ┌──────────────────────────┐
  │  Délivrance d'un groupe   │─S41   │   Délivrance d'un vecteur │
  │         vecteur           │       └──────────────────────────┘
  └──────────────┬───────────┘
                 │
  S43 ╲          ▼
  ┌──────────────────────────┐
  │   Délivrance de données   │
  └──────────────┬───────────┘
                 │
                 ▼
  ┌──────────────────────────┐
  │       Mémorisation        │─S44
  └──────────────┬───────────┘
                 │
                 ▼
  ┌──────────────────────────┐
  │           i++             │─S45
  └──────────────┬───────────┘
                 │
  S46 ╲          ▼              S460 ╲
  ┌──────────────────┐         ┌──────────────────┐
  │    Groupe de     │ Oui     │ Vecteurs restants │ Oui
  │ vecteurs restants│         │        ?          │
  │        ?         │         └─────────┬─────────┘
  └────────┬─────────┘                   │ Non
           │ Non                         │
           ▼                             │
  ┌──────────────────────────┐           │
  │        Moyenne           │◄──────────┘
  └──────────────┬───────────┘  S47
                 │
                 ▼
            ┌─────────┐
            │   S5    │
            └─────────┘
```

## FIG.4

## FIG.5

**Europäisches Patentamt**
**European Patent Office**
**Office européen des brevets**

# RAPPORT DE RECHERCHE EUROPEENNE

Numéro de la demande

EP 20 16 2647

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Darryl D Lin ET AL: "FIXED POINT QUANTIZATION OF DEEP CONVOLU- TIONAL NETWORKS", , 7 janvier 2016 (2016-01-07), XP055398862, Extrait de l'Internet: URL:https://arxiv.org/pdf/1511.06393v2.pdf [extrait le 2017-08-16] * abrégé * * chapitres 1-3; page 2 - page 5; figures 1, 2 * ----- | 1-15 | INV. G06N3/063 G06N3/08 G06N3/04 |
| X | PHILIPP GYSEL: "Ristretto: Hardware-Oriented Approximation of Convolutional Neural Networks", ARXIV.ORG, CORNELL UNIVERSITY LIBRARY, 201 OLIN LIBRARY CORNELL UNIVERSITY ITHACA, NY 14853, 20 mai 2016 (2016-05-20), XP080702537, * abrégé * * chapitre 3.2; page 21 - page 24; figure 3.1; tableau 3.1 * * chapitres 4-5; page 25 - page 37; figures 4.1-5.3; tableaux 4.1-5.2 * ----- | 1-15 | |
| X | KRZYSZTOF WR\'OBEL ET AL: "Convolutional neural network compression for natural language processing", ARXIV.ORG, CORNELL UNIVERSITY LIBRARY, 201 OLIN LIBRARY CORNELL UNIVERSITY ITHACA, NY 14853, 28 mai 2018 (2018-05-28), XP080883024, * abrégé * * chapitres I. - II.; page 1 - page 3; figure 1; tableau 1 * ----- | 1-15 | |

DOMAINES TECHNIQUES RECHERCHES (IPC)

G06N

Le présent rapport a été établi pour toutes les revendications

| Lieu de la recherche | Date d'achèvement de la recherche | Examinateur |
|---|---|---|
| La Haye | 30 avril 2020 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)